# EUROPEAN PATENT APPLICATION

(11) **EP 3 405 000 A1**
(43) Date of publication of application: **21.11.2018**
(21) Application number: 17171465.2
(22) Date of filing: 17.05.2017
(51) Int. Cl.: H05B 1/02

(54) **HEATER FOR A MOTOR VEHICLE**

(71) Applicant: Mahle International GmbH, 70376 Stuttgart (DE)
(72) Inventor: BARUSCHKE, Wilhelm, 73117 Wangen (DE); GAUTSCH, Laurent, 67600 Mussig (FR); GRIES, Jean-Philippe, 68000 Colmar (FR); HEITZ, Dr., Jérôme, 68100 Mulhouse (FR); LUBRITZ, Oliver, 70197 Stuttgart (DE); TREIER, Joachim, 77728 Oppenau (DE)
(74) Representative: BRP Renaud & Partner mbB Rechtsanwälte Patentanwälte Steuerberater

(57) **Abstract**

Heater (1) for a motor vehicle, in particular a PTC heater, wherein the heater (1) comprises a supply conductor (3) and a controller board (4), wherein the supply conductor (3) can connect the heater (1) to a current source via the controller board (4), wherein the heater (1) incorporates a current measuring arrangement (10) with a current measuring sensor, and wherein the current measuring sensor is a Hall effect sensor (11).

## Description

The invention relates to a heater for a motor vehicle, in particular a PTC heater.

PTC heaters are employed in a motor vehicle, for example, for the warming of the cold air flowing into a passenger compartment upon a cold start-up of the motor vehicle, or for the de-icing of the motor vehicle windows. To this end, the PTC heater is connected by means of a supply conductor to a current source - generally the starter battery - via a controller board.

In order to adjust the current flowing to the PTC heater, and thus to be able to adjust the heating capacity of the PTC heater, the PTC heater incorporates a current measuring arrangement with a current measuring sensor. In conventional PTC heaters, current measuring shunts are employed as current measuring sensors, and are connected to the supply conductor of the PTC heater in an electrically conductive arrangement. The current measuring shunt is thus connected in series with the PTC heater. The current flowing to the PTC heater is then measured by the current measuring shunt, and is routed to an evaluation circuit or evaluation device. Thereafter, the current flowing to the PTC heater can be adjusted, in order to achieve an optimum heating capacity. Current measuring arrangements of this type are known, for example, from the printed publication DE 102004046275 A1.

The current measuring shunt is series-connected in a heater power power circuit such that, upon the measurement of the current using the current measuring shunt, a voltage drop occurs in the heater power circuit. The voltage drop has a negative impact upon the heating capacity of the PTC heater and, in particular where a high current is to be measured, can lead to substantial heat generation on the current measuring shunt, and ultimately on the controller board.

The object of the invention is therefore the disclosure of a heater with a current measuring arrangement, which eliminates the aforementioned problems.

According to the invention, this object is fulfilled by the subject matter of independent Claim 1. Advantageous embodiments are the subject of the dependent claims.

The present invention is based upon the general consideration that the current measuring sensor in the current measuring arrangement is a Hall effect sensor. Using the Hall effect sensor, the current flowing to the heater can be measured with no interruption in the supply conductor, such that current measurement has no negative impact upon the heating capacity of the heater and, moreover, the generation of heat on the controller board is reduced. Naturally, current measurement using the Hall effect sensor can be executed in the same manner on both the negative pole terminal and the positive pole terminal of the heater. The Hall effect sensor detects a magnetic field in the region of the supply conductor which correlates to the current flowing therein such that, ultimately, the measured value on the Hall effect sensor also correlates to the current flowing.

According to an advantageous further development of the solution according to the invention, the Hall effect sensor is configured on a board-mounted section of the supply conductor, which is arranged on the controller board. On the controller board, the board-mounted section of the supply conductor bonds the current source to a terminal bush, to which the heater can be connected.

For the measurement of the current, the Hall effect sensor can be arranged above the board-mounted section of the supply conductor, or laterally thereto, in a magnetic field which is generated by the current flowing in the board-mounted section of the supply conductor. In order to reduce the space requirement for the Hall effect sensor on the controller board, the Hall effect sensor can, for example, be integrated on the controller board, and oriented in a lateral or vertical direction. A measured current value determined by the Hall effect sensor can then be routed to an evaluation circuit.

Alternatively, it is advantageously provided that the Hall effect sensor is configured on a feeder section of the supply conductor which runs from the controller board to the heater. The feeder section of the supply conductor is thus routed from the controller board to the heater and encompasses, among other elements, the terminal bush on the controller board and a heater bush on a heater body. The terminal bush and the heater bush can be connected by a heater cable, such that the current can flow from the controller board to the heater via the feeder section.

For the purposes of current measurement, the Hall effect sensor can be arranged on the feeder section. As a current flowing to the heater generates a magnetic field along the entire feeder section, the Hall effect sensor can be arranged on the terminal bush, on the heater bush or, alternatively, on the heater cable. Configuring of the Hall effect sensor on the feeder section can be achieved, for example, by means of an adhesive-bonded connection, a clamped connection or a plug-in connection.

In order to eliminate unnecessary cabling between the Hall effect sensor and the controller board, the Hall effect sensor can advantageously be arranged directly on the controller board. For example, the Hall effect sensor can be arranged on the terminal bush, such that the Hall effect sensor is configured on the controller board, but nevertheless lies within the magnetic field surrounding the feeder section.

In order to increase a current measurement value to be measured by the Hall effect sensor, in a further development of the heater according to the invention, it is advantageously provided that the current measuring arrangement incorporates an iron core. The iron core can increase the magnetic field around the feeder section of the supply conductor, thus permitting the measurement of smaller currents by the Hall effect sensor and the optimization of the heating capacity of the heater, even in the low capacity range. For the purposes of current measurement, the Hall effect sensor can then be arranged in the magnetic field which is amplified by the iron core.

The iron core is advantageously configured in an essentially annular form, and encloses the feeder section of the supply conductor. The Hall effect sensor can then be arranged adjacently to the annular iron core. The annular iron core can increase the magnetic field surrounding the feeder section of the supply conductor in a particularly effective manner, thereby permitting an increase of the current value to be measured, and also permitting the measurement of smaller currents by the Hall effect sensor.

In an advantageous further development of the iron core, it is provided that the iron core incorporates an in particular radial recess, and that the Hall effect sensor is inserted in the recess in the iron core and is secured therein. In this manner, the magnetic field flowing through the Hall effect sensor can be increased, such that smaller currents can be measured, and also permitting the optimization of the heating capacity, even in the lower capacity range.

It is advantageously provided that the current measuring arrangement incorporates an evaluation unit. The evaluation unit can, for example, assign the measuring signals generated by the Hall effect sensor to current values and accordingly generate current measurement values. Moreover, the evaluation unit can evaluate and appraise the measured or calculated current measurement value and, where applicable, adjust the heating capacity of the heater, e.g. in the manner of a feedback control arrangement or control circuit. The evaluation unit can, for example, incorporate a microcontroller, which is advantageously arranged on the controller board, and can be bonded to further electrical components in a signal-transmitting arrangement.

The evaluation unit can advantageously be bonded to the board-mounted section of the supply conductor or to the feeder section of the supply conductor in an electrically conductive arrangement. In a further development of the evaluation unit, it is provided that that Hall effect sensor is arranged on the evaluation unit. In this manner, the evaluation unit is incorporated into the heater power circuit, such that the Hall effect sensor can measure the current flowing through the evaluation unit. The space requirement for the evaluation unit and the Hall effect sensor on the controller board can also be advantageously reduced in this manner.

In an advantageous further development of the solution according to the invention, it is provided that the Hall effect sensor is supplied with a current by a sensor power circuit, wherein the sensor power circuit is separate from a heater power circuit for the supply of the heater. For example, if the heater is supplied by a 24 V system, the Hall effect sensor can be supplied by a 12 V system. For the execution of current measurement, the Hall effect sensor can then be arranged on the supply conductor of the 24 V system which feeds the heater, although the Hall effect sensor itself is not supplied by the 24 V system.

In this advantageous embodiment, the sensor power circuit and the heater power circuit can be mutually galvanically isolated, such that current measurement by the Hall effect sensor does not affect the heater power circuit, and can be executed in an exceptionally accurate manner. The evaluation unit can also be supplied by the sensor power circuit, such that the evaluation unit is also galvanically isolated from the heater power circuit.

Further important characteristics and advantages of the invention proceed from the sub-claims, from the drawings, and from the associated description of the figures, provided with reference to the drawings.

It will be understood that the aforementioned characteristics, and those yet to be described hereinafter, are applicable not only in the respective combination indicated, but also in other combinations or in isolation, without departing from the scope of the present invention.

Preferred exemplary embodiments of the invention are represented in the drawings, and are described in greater detail in the description hereinafter, wherein the same reference numbers are applied to identical, similar or functionally equivalent components.

Herein, schematically in each case,
- Fig. 1: shows a side view of a heater, wherein a Hall effect sensor is arranged on a board-mounted section of a supply conductor;
- Fig. 2: shows an overhead view of the heater represented in Fig. 1;
- Fig. 3: shows a side view of a heater, wherein a Hall effect sensor is arranged on a feeder section of a supply conductor;
- Fig. 4: shows an underside view of the heater represented in Fig. 3;
- Fig. 5: shows a side view of a heater, wherein a Hall effect sensor is arranged in an iron core;
- Fig. 6: shows an underside view of the heater represented in Fig. 5;
- Fig. 7: shows an overhead view of a heater with an evaluation unit.

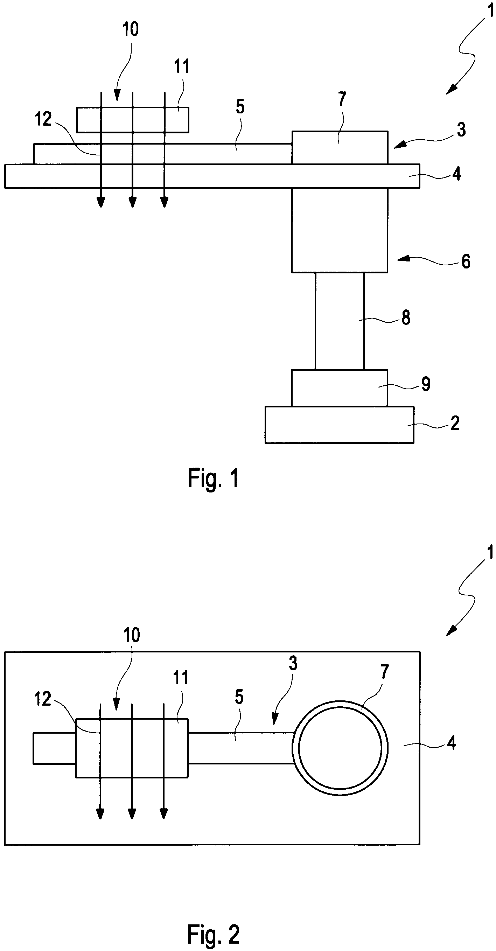

Fig. 1 shows a side view, and Fig. 2 shows an overhead view of a heater 1 with a heater body 2. The heater 1 comprises a supply conductor 3 and a controller board 4, wherein the supply conductor 3 can connect the heater 1 to a current source via the controller board 4. The supply conductor 3 comprises a board-mounted section 5 and a feeder section 6. The board-mounted section 5 lies on the controller board 4, and the feeder section 5 of the supply conductor 3 connects the board-mounted section 5 to the heater body 2, and comprises a terminal bush 7, a heater cable 8 and a heater bush 9.

The heater 1 incorporates a current measuring arrangement 10 with a Hall effect sensor 11. The Hall effect sensor 11 is arranged on the board-mounted section 5 of the supply conductor 3, and can measure a magnetic field 12 generated by the current flowing in the board-mounted section 5. The measurement of current by the Hall effect sensor 11 is executed with no interruption of the board-mounted section 5, such that any negative impact of current measurement upon the heating capacity of the heater 1, and upon the generation of heat on the controller board 4, is prevented.

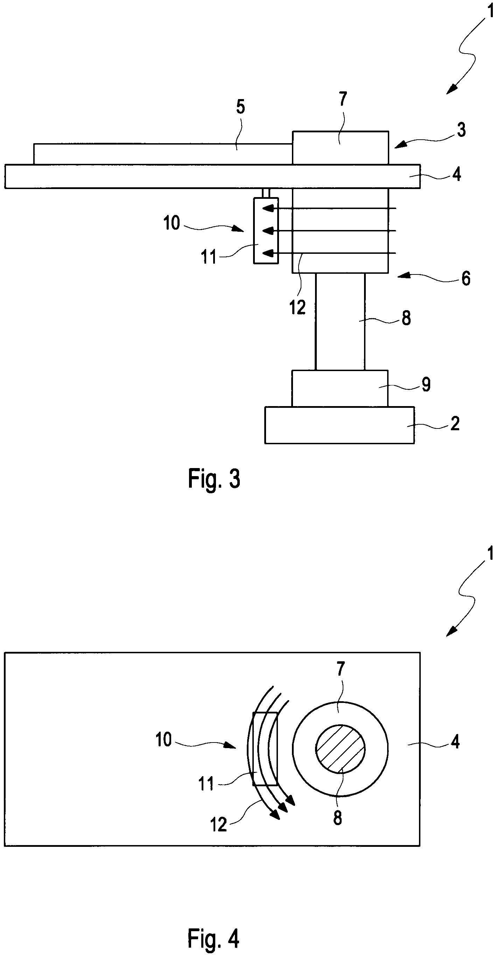

Fig. 3 shows a side view and Fig. 4 shows an underside view of the heater 1, wherein the Hall effect sensor 11 is arranged on the terminal bush 7 of the feeder section 6. The current flowing in the supply conductor 3 generates the magnetic field 12, which can be measured by the Hall effect sensor 11. In order to eliminate unnecessary cabling between the Hall effect sensor 11 and the controller board 4, the Hall effect sensor 11 is arranged directly on the controller board 4, wherein the Hall effect sensor 11 nevertheless is arranged within the magnetic field 12 surrounding the terminal bush 7.

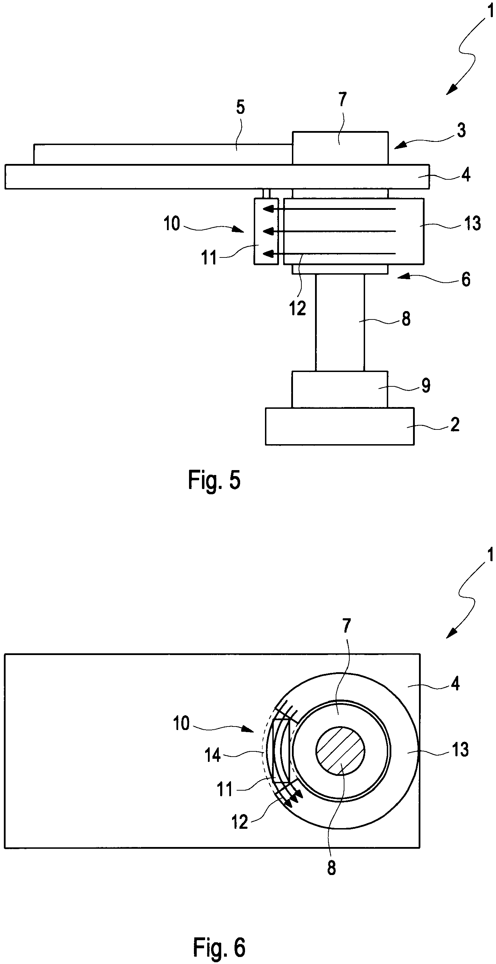

Fig. 5 shows a side view, and Fig. 6 shows an underside view of the heater 1, wherein the Hall effect sensor 11 is arranged in an iron core 13. The iron core 13 increases the magnetic field 12 surrounding the feeder section 6 of the supply conductor 3, thus permitting also the measurement of smaller currents by the Hall effect sensor 11 and the effective adjustment of the heating capacity of the heater 1, even in the low capacity range.

The iron core 13 is configured in an essentially annular form, and is arranged around the terminal bush 7 of the feeder section 6. The Hall effect sensor 11 is arranged here in a recess 14 in the iron core 13. The annular iron core 13 can increase the magnetic field 12 surrounding the terminal bush 7 in a particularly effective manner.

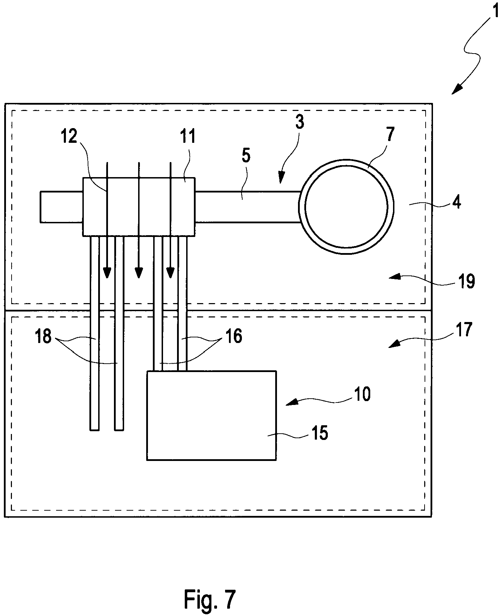

Fig. 7 shows an overhead view of the heater 1, with an evaluation unit 15. The evaluation unit 15 can comprise, for example, a microcontroller, and can be connected to the Hall effect sensor 11 by a transmission cable 16. The Hall effect sensor 11 is arranged on the supply conductor 3, and is supplied with a current in a sensor power circuit 17 by means of supply cables 18, wherein the sensor power circuit 17 is separate from a heater power circuit 19 for the supply of the heater 1. For example, the heater 1 can be supplied by a 24 V system, whereas the Hall effect sensor 11 is supplied by a 12 V system. In this embodiment, the sensor power circuit 17 and heater power circuit 19 are mutually galvanically isolated, such that current measurement by the Hall effect sensor 11 does not affect the heater power circuit 19, and can be executed in an exceptionally accurate manner.

### List of reference numbers

- 1.: Heater
- 2.: Heater body
- 3.: Supply conductor
- 4.: Controller board
- 5.: Board-mounted section of supply conductor
- 6.: Feeder section of supply conductor
- 7.: Terminal bush
- 8.: Heater cable
- 9.: Heater bush
- 10.: Current measuring arrangement
- 11.: Hall effect sensor
- 12.: Magnetic field
- 13.: Iron core
- 14.: Recess
- 15.: Evaluation unit
- 16.: Transmission cable
- 17.: Sensor power circuit
- 18.: Supply cable
- 19.: Heater power circuit

## Claims

1. Heater (1) for a motor vehicle, in particular a PTC heater, wherein the heater (1) comprises a supply conductor (3) and a controller board (4), wherein the supply conductor (3) can connect the heater (1) to a current source via the controller board (4), and wherein the heater (1) incorporates a current measuring arrangement (10) with a current measuring sensor, **characterized in that** the current measuring sensor is a Hall effect sensor (11).

2. Heater (1) according to Claim 1, **characterized in that** the Hall effect sensor (11) is configured on a board-mounted section (5) of the supply conductor (3) which is arranged on the controller board (4).

3. Heater (1) according to Claim 1, **characterized in that** the Hall effect sensor (11) is configured on a feeder section (6) of the supply conductor (3) which runs from the controller board (4) to the heater (1).

4. Heater (1) according to one of the preceding claims, **characterized in that** the current measuring arrangement (10) incorporates an iron core (13), in order to increase the current measurement value to be measured by the Hall effect sensor (11).

5. Heater (1) according to Claim 4, **characterized in that** the iron core (13) is configured in an essentially annular form, and encloses the feeder section (6) of the supply conductor (3).

6. Heater (1) according to one of Claims 4 or 5, **characterized in that** the iron core (13) incorporates a recess (14), and **in that** the Hall effect sensor (11) is secured in the recess (14) of the iron core (13).

7. Heater (1) according to one of the preceding claims, **characterized in that** the current measuring arrangement (11) incorporates an evaluation unit (15).

8. Heater (1) according to Claim 7, **characterized in that** the evaluation unit (15) incorporates a microcontroller.

9. Heater (1) according to Claim 7 or 8, **characterized in that** the evaluation unit (15) is bonded to the board-mounted section (5) of the supply conductor (3) or to the feeder section (6) of the supply conductor (3) in an electrically conductive arrangement.

10. Heater (1) according to Claim 9, **characterized in that** the Hall effect sensor (11) is arranged on the evaluation unit (15), thus permitting the measurement of a current flowing through the evaluation unit (15).

11. Heater (1) according to one of the preceding claims, **characterized in that** the Hall effect sensor (11) is supplied with a current by a sensor power circuit (17), wherein the sensor power circuit (17) is separate from a heater power circuit (19) for the supply of the heater (1).
